# EUROPEAN PATENT APPLICATION

(11) **EP 4 753 313 A1**
(43) Date of publication of application: **03.06.2026**
(21) Application number: 23946147.8
(22) Date of filing: 24.07.2023
(51) Int. Cl.: H04W 24/02

(54) **COMMUNICATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2023/108989
(87) International publication number: WO 2025/020053

(57) **Abstract**

Provided in the present disclosure are a communication method and apparatus, a communication device, a communication system, and a storage medium. The method comprises: a first entity training a first model, so as to obtain a trained first model; the first entity sending the trained first model to a second entity; the second entity sending the trained first model to a third entity; the third entity using the trained first model to support the transmission of an AI model between other NFs or entities. The performance of the communication system can be enhanced by means of an AI model.

## Description

### TECHNICAL FIELD

The present disclosure relates to the field of communication technologies, and in particular relates to a communication method, a communication apparatus, a communication device, a communication system, and a storage medium.

### BACKGROUND

In the field of mobile communication networks, introducing artificial intelligence (AI) machine learning (ML) into the 3rd generation partnership project (3GPP) may improve network performance, achieve network automation, and optimize energy efficiency.

### SUMMARY

The present disclosure provides a communication method, a communication apparatus, a communication device, a communication system, and a storage medium.

According to a first aspect of embodiments of the present disclosure, a communication method is provided, which is performed by a first entity and includes:
training a first model to obtain a trained first model, and sending the trained first model to a second entity.

According to a second aspect of embodiments of the present disclosure, a communication method is provided, which is performed by a second entity and includes:
obtaining a trained first model.

According to a third aspect of embodiments of the present disclosure, a communication method is provided, which is performed by a third entity and includes:
obtaining a trained first model, and using the trained first model.

According to a fourth aspect of embodiments of the present disclosure, a communication method is provided, which is performed by a communication system, the communication system including a first entity, a second entity, and a third entity, the method including:

training, by the first entity, a first model to obtain a trained first model; sending, by the first entity, the trained first model to the second entity; sending, by the second entity, the trained first model to the third entity; and using, by the third entity, the trained first model.

According to a fifth aspect of embodiments of the present disclosure, a first entity is provided, which includes:
a processing module configured to train a first model to obtain a trained first model, and a transceiver module configured to send the trained first model to a second entity.

According to a sixth aspect of embodiments of the present disclosure, a second entity is provided, which includes:
a transceiver module configured to obtain a trained first model.

According to a seventh aspect of embodiments of the present disclosure, a third entity is provided, which includes:
a transceiver module configured to obtain a trained first model, and a processing module configured to use the trained first model.

According to an eighth aspect of embodiments of the present disclosure, a communication device is provided, which includes:
a transceiver; a memory; and a processor connected to the transceiver and the memory, respectively, and configured to control a transmission and a reception of a wireless signal from the transceiver and be capable of implementing the communication method according to any one of the first aspect, the second aspect, the third aspect, or the fourth aspect by executing computer-executable instructions in the memory.

According to a ninth aspect of embodiments of the present disclosure, a communication system is provided, which includes a first entity configured to implement the communication method according to the first aspect, a second entity configured to implement the communication method according to the second aspect, and a third entity configured to implement the communication method according to the third aspect.

According to a tenth aspect of embodiments of the present disclosure, a computer storage medium is provided, which has stored therein computer-executable instructions that, after executed by a processor, are capable of implementing the communication method according to any one of the first aspect, the second aspect, the third aspect, or the fourth aspect.

### BRIEF DESCRIPTION OF THE DRAWINGS

These and/or additional aspects and advantages of the present disclosure will become apparent and more readily appreciated from the following descriptions of the embodiments made with reference to the drawings, in which:
FIG. 1 is a schematic diagram of the architecture of a communication system provided in an embodiment of the present disclosure;
FIG. 2 is a schematic diagram of the interaction of a communication method provided in an embodiment of the present disclosure;
FIGS. 3a to 3b are schematic flowcharts of a communication method provided in yet another embodiment of the present disclosure;
FIGS. 4a to 4b are schematic flowcharts of a communication method provided in yet another embodiment of the present disclosure;
FIGS. 5a to 5c are schematic flowcharts of a communication method provided in yet another embodiment of the present disclosure;
FIG. 6 is a schematic flowchart of a communication method provided in yet another embodiment of the present disclosure;
FIG. 7 is a schematic diagram of the architecture of a communication system provided in yet another embodiment of the present disclosure;
FIG. 8a is a schematic block diagram of a first entity provided in an embodiment of the present disclosure;
FIG. 8b is a schematic block diagram of a second entity provided in an embodiment of the present disclosure;
FIG. 8c is a schematic block diagram of a third entity provided in an embodiment of the present disclosure;
FIG. 9a is a schematic block diagram of a communication device provided in an embodiment of the present disclosure;
FIG. 9b is a schematic block diagram of a chip provided in an embodiment of the present disclosure.

### DETAILED DESCRIPTION

The method in the present disclosure may be used to solve the technical problem that "an AI model in a communication system may only be shared within a network data analytics function (NWDAF) and is not supported for sharing with other network functions (NFs), and AI technologies are not used to enhance the communication system".

The embodiments of the present disclosure provide a communication method, a communication apparatus, a communication device, a communication system, and a storage medium.

In a first aspect, embodiments of the present disclosure provide a communication method, which is performed by a first entity and includes: training a first model to obtain a trained first model, and sending the trained first model to a second entity.

In the above embodiments, the first entity may obtain an AI model by training and send the AI model to the second entity. The AI model may be transferred between the first entity and the second entity, thus solving the problem that the AI model may only be shared within the NWDAF.

In conjunction with some embodiments of the first aspect, in some embodiments, training the first model to obtain the trained first model includes: collecting training data, and training the first model based on the training data to obtain the trained first model.

In the above embodiments, the first entity may collect data from the communication system as training data to perform model training to obtain the AI model.

In conjunction with some embodiments of the first aspect, in some embodiments, the first entity is at least one of a core network device, a terminal, an access network device, or a third-party server, and the second entity is at least one of a core network device, a terminal, an access network device, or a third-party server.

In the above embodiments, the AI model may be obtained by training, which not only supports the sharing of the AI model within the NWDAF, but also supports the sharing of the AI model between other NFs or entities except the NWDAF.

In conjunction with some embodiments of the first aspect, in some embodiments, the first model is used for at least one of: network data analysis, communication resource allocation, load balancing, positioning, interference management, beam management, channel status information (CSI) enhancement, network automation, or network energy saving.

In the above embodiments, the problem that AI technologies are not used to enhance the communication system is solved. The AI model may be used to enhance the performance of the communication system, including at least one of network data analysis, communication resource allocation, load balancing, positioning, interference management, beam management, CSI enhancement, network automation, or network energy saving.

In a second aspect, embodiments of the present disclosure provide a communication method, which is performed by a second entity and includes: obtaining a trained first model.

In the above embodiments, the second entity may obtain the AI model, thus solving the problem that the AI model may only be shared within the NWDAF.

In conjunction with some embodiments of the second aspect, in some embodiments, obtaining the trained first model includes: receiving the trained first model sent by a first entity.

In the above embodiments, the second entity may receive the AI model trained by the first entity, and the AI model may be transferred between the first entity and the second entity, thus solving the problem that the AI model may only be shared within the NWDAF.

In conjunction with some embodiments of the second aspect, in some embodiments, the method further includes: storing the trained first model.

In the above embodiments, the second entity may store the trained AI model.

In conjunction with some embodiments of the second aspect, in some embodiments, the method further includes: receiving a subscription message sent by a third entity, where the third entity is configured to use the trained first model, and the subscription message is used to subscribe to the trained first model.

In the above embodiments, the third entity may obtain the trained AI model by subscription.

In conjunction with some embodiments of the second aspect, in some embodiments, the method further includes: sending the trained first model to a third entity.

In the above embodiments, the AI model may be transferred between the second entity and the third entity, thus solving the problem that the AI model may only be shared within the NWDAF.

In conjunction with some embodiments of the first aspect, in some embodiments, the first entity is at least one of a core network device, a terminal, an access network device, or a third-party server, and the second entity is at least one of a core network device, a terminal, an access network device, or a third-party server.

In the above embodiments, the AI model may be transferred between the first entity and the second entity, which supports not only the sharing of the AI model within the NWDAF, but also the sharing of the AI model between other NFs or entities except the NWDAF.

In conjunction with some embodiments of the first aspect, in some embodiments, the first model is used for at least one of: network data analysis, communication resource allocation, load balancing, positioning, interference management, beam management, CSI enhancement, network automation, or network energy saving.

In the above embodiments, the problem that AI technologies are not used to enhance the communication system is solved. The AI model may be used to enhance the performance of the communication system, including at least one of network data analysis, communication resource allocation, load balancing, positioning, interference management, beam management, CSI enhancement, network automation, or network energy saving.

In a third aspect, embodiments of the present disclosure provide a communication method, which is performed by a third entity and includes: obtaining a trained first model, and using the trained first model.

In the above embodiments, the third entity may obtain the AI model, thus solving the problem that the AI model may only be shared within the NWDAF.

In conjunction with some embodiments of the third aspect, in some embodiments, obtaining the trained first model includes: receiving the trained first model sent by a second entity.

In the above embodiments, the AI model may be transferred between the second entity and the third entity, thus solving the problem that the AI model may only be shared within the NWDAF.

In conjunction with some embodiments of the third aspect, in some embodiments, the method further includes at least one of: sending a request message to the second entity, the request message being used to request the second entity to send the trained first model; or sending a subscription message to the second entity, the subscription message being used to subscribe to the trained first model.

In the above embodiments, it is clear that the third entity may obtain the AI model via the request message or by subscription.

In conjunction with some embodiments of the third aspect, in some embodiments, using the trained first model includes: using the trained first model to perform at least one of: network data analysis, communication resource allocation, load balancing, positioning, interference management, beam management, CSI enhancement, network automation, or network energy saving.

In the above embodiments, the problem that AI technologies are not used to enhance the communication system is solved. The third entity may use the AI model to enhance the performance of the communication system, including at least one of network data analysis, communication resource allocation, load balancing, positioning, interference management, beam management, CSI enhancement, network automation, or network energy saving.

According to a fourth aspect of embodiments of the present disclosure, a communication method is provided, which is performed by a communication system, the communication system including a first entity, a second entity, and a third entity, the method including:

training, by the first entity, a first model to obtain a trained first model; sending, by the first entity, the trained first model to the second entity; sending, by the second entity, the trained first model to the third entity; and using, by the third entity, the trained first model.

In the above embodiments, a communication system architecture that supports an AI framework is provided to solve the problem that the AI model may only be shared within the NWDAF, support the transferring of the AI model between other NFs or entities, and may use the AI model to enhance the performance of the communication system.

According to a fifth aspect of embodiments of the present disclosure, a first entity is provided, which includes:
a processing module configured to train a first model to obtain a trained first model, and a transceiver module configured to send the trained first model to a second entity.

According to a sixth aspect of embodiments of the present disclosure, a second entity is provided, which includes:
a transceiver module configured to obtain a trained first model.

According to a seventh aspect of embodiments of the present disclosure, a third entity is provided, which includes:
a transceiver module configured to obtain a trained first model, and a processing module configured to use the trained first model.

According to an eighth aspect of embodiments of the present disclosure, a communication device is provided, which includes:
a transceiver; a memory; and a processor connected to the transceiver and the memory, respectively, and configured to control a transmission and a reception of a wireless signal from the transceiver and be capable of implementing the communication method according to any one of the first aspect, the second aspect, the third aspect, or the fourth aspect by executing computer-executable instructions in the memory.

According to a ninth aspect of embodiments of the present disclosure, a communication system is provided, which includes a first entity configured to implement the communication method according to the first aspect, a second entity configured to implement the communication method according to the second aspect, and a third entity configured to implement the communication method according to the third aspect.

In combination with some embodiments of the ninth aspect, in some embodiments, the first entity is configured to train the first model, the second entity is configured to store the trained first model, and the third entity is configured to use the trained first model.

According to a tenth aspect of embodiments of the present disclosure, a computer storage medium is provided, which has stored therein computer-executable instructions that, after executed by a processor, are capable of implementing the communication method according to any one of the first aspect, the second aspect, the third aspect, or the fourth aspect.

In an eleventh aspect, embodiments of the present disclosure provide a program product that, when executed by a communication device, causes the communication device to perform the methods described in the first aspect and an optional implementation of the first aspect, the second aspect and an optional implementation of the second aspect, or the third aspect and an optional implementation of the third aspect.

In a twelfth aspect, embodiments of the present disclosure provide a computer program that, when run on a computer, causes the computer to perform the methods described in the first aspect and an optional implementation of the first aspect, the second aspect and an optional implementation of the second aspect, or the third aspect and an optional implementation of the third aspect.

In a thirteenth aspect, embodiments of the present disclosure provide a chip or chip system. The chip or chip system includes a processing circuitry configured to perform the method described in an optional implementation of the first aspect, the second aspect, or the third aspect above.

It may be understood that the first entity, the second entity, the third entity, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure provide a communication method. In some embodiments, terms such as a communication method, an information processing method, and a communicating method may be used interchangeably; terms such as an information transmitting device, an information processing device, and a communication device may be used interchangeably; and terms such as an information processing system, and a communication system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In the embodiments of the present disclosure, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, devices and the like may be interpreted as physical or virtual, and their names are not limited to the names described in the embodiments. Terms such as "apparatus," "equipment," "device," "circuit," "network element," "node," "function," "unit," "section," "system," "network," "chip," "chip system," "entity," and "body" may be used interchangeably.

In some embodiments, the "network" may be interpreted as devices included in the network, e.g., an access network device, a core network device, or the like.

In some embodiments, terms such as "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "carrier," "component carrier," and "bandwidth part (BWP)" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, also referred to as device-to-device (D2D) communication, vehicle-to-everything (V2X) communication, or the like). In this case, the terminal may be configured to have all or some of the functions of the access network device. Furthermore, the words such as "uplink" and "downlink" may be replaced with words corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

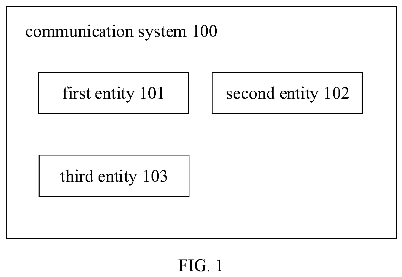

FIG. 1 is a schematic diagram illustrating the architecture of a communication system according to an embodiment of the present disclosure.

As shown in FIG. 1, the communication system 100 may include a first entity 101, a second entity 102, and a third entity 103.

In some embodiments, the first entity is configured to collect training data and train an AI model based on the training data, for example, the first entity is an AI model training entity.

In some embodiments, the first entity may be at least one of a core network device, a terminal, an access network device, or a third-party server.

In some embodiments, the first entity is a network data analytics function (NWDAF), and may specifically be an analytics logical function (AnLF) or a model training logical function (MTLF). The first entity may also be other new core network devices, which are not limited in the present disclosure.

In some embodiments, the first entity collects data from other necessary network functions (NFs), a user equipment (UE), an access network device, or an operation administration and maintenance (OAM, or referred to as network management).

In some embodiments, the second entity is configured to store the AI model and receive the trained AI model from the first entity, for example, the second entity is an AI model storage entity.

In some embodiments, the second entity may be at least one of a core network device, a terminal, an access network device, or a third-party server.

In some embodiments, the second entity may be a network repository function (NRF) or other new core network devices.

In some embodiments, the third entity is an entity that uses the AI model, for example, the third entity is an AI model inference entity.

In some embodiments, the third entity may be at least one of a core network device, a terminal, an access network device, or a third-party server.

In some embodiments, the core network device may be a single device including one or more network elements, or may be multiple devices or a group of devices, each including all or some of one or more network elements. The network elements may be virtual or physical. The core network includes, for example, at least one of an evolved packet core (EPC), a 5G core network (5GCN), or a next generation core (NGC).

In some embodiments, the above-mentioned one or more network elements may include, for example, a policy control function (PCF), an application function (AF), a network application function (NAF), an authentication and key management for applications anchor function (AAnF), a bootstrapping server functionality (BSF), an access and mobility management function (AMF), a user plane function (UPF), a session management function (SMF), a mobility management entity (MME), and the like.

In some embodiments, the PCF, the AF, the NAF, the AAnF, the BSF, the AMF, the UPF, the SMF, and the MME which are mentioned above are configured for "functional limitations", and the names are not limited thereto.

In some embodiments, the PCF, the AF, the NAF, the AAnF, the BSF, the AMF, the UPF, the SMF, and the MME which are mentioned above may be independent of the core network device.

In some embodiments, the PCF, the AF, the NAF, the AAnF, the BSF, the AMF, the UPF, the SMF, and the MME which are mentioned above may be part of the core network device.

In some embodiments, for example, the terminal includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home.

In some embodiments, the access network device is, for example, a node or device that connects the terminal to a wireless network. The access network device may include, but is not limited to, at least one of: an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN architecture. The processes and information interactions between these internal interfaces may be implemented by software or programs.

In some embodiments, the access network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU.

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in this embodiment of the present disclosure is also applicable to similar technical problems.

The following embodiments of the present disclosure may be applied to the communication system 100 shown in FIG. 1, or to some entities thereof, but are not limited thereto. The entities shown in FIG. 1 are illustrative. The communication system 100 may include all or some of the entities in FIG. 1, or the communication system may include other entities outside in FIG. 1. The number and form of individual entities are arbitrary. The connection relationship between the entities is illustrative. The entities may not be connected to each other, or may be connected to each other in any way. The connection may be direct or indirect, and may be wired or wireless.

For an AI/ML framework, some use cases for AI/ML models have been researched and identified in related technologies. However, in the relevant technologies, an AI/ML model may only be shared among NWDAFs and is not supported for sharing with other NFs. Therefore, AI technologies have not been used to enhance a communication system.

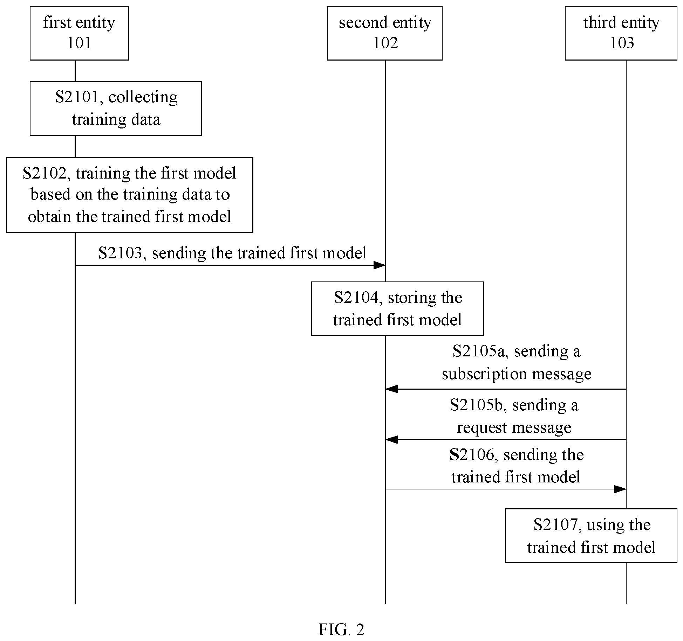

FIG. 2 is a schematic diagram illustrating the interaction of a communication method according to an embodiment of the present disclosure. As shown in FIG. 2, embodiments of the present disclosure relate to a communication method performed by the communication system 100. The method includes the following steps.

At step 2101, a first entity 101 collects training data.

In some embodiments, the first entity 101 is configured to collect training data and train a first model based on the training data.

In some embodiments, the first model is an AI model, and the first entity 101 is configured to collect training data and train the AI model based on the training data, for example, the first entity 101 is an AI model training entity.

In some embodiments, the first entity 101 may be at least one of a core network device, a terminal, an access network device, or a third-party server.

In some embodiments, the first entity 101 is an NWDAF, and may specifically be an AnLF or an MTLF. The first entity 101 may also be other new core network devices, which are not limited in the present disclosure.

In some embodiments, the first entity 101 collects necessary data from other core network devices, a UE, an access network device, or an OAM.

In some embodiments, the first entity 101 collects data from other necessary core network devices, for example, the first entity 101 collects necessary data from a UPF, a PCF, or the like.

In some embodiments, the first entity 101 collects necessary data from the access network device, for example, the first entity 101 collects necessary data from a gNB, or the like.

At step 2102, the first entity 101 trains the first model based on the training data to obtain the trained first model.

In some embodiments, the first entity 101 trains the AI model by collecting necessary data from other core network devices, a UE, an access network device, or an OAM.

For example, the first entity is an NWDAF, and the NWDAF trains the AI model by collecting necessary data from other NFs, such as a gNB, a UPF, a PCF, or the like; or an OAM or a UE.

In some embodiments, the first model is used for at least one of: network data analysis, communication resource allocation, load balancing, positioning, interference management, beam management, CSI enhancement, network automation, or network energy saving.

For example, the first model is used for network energy saving. A communication network system collects user access data from the first entity 101 to train the first model. The first model may be used to predict the number of users accessing the network in one or more periods in the future. If the number of users at some base stations is currently low, the communication network system may shut down the servers of the corresponding base stations to achieve network energy saving. At step 2103, the first entity 101 sends the first model to the second entity 102.

In some embodiments, the second entity 102 is configured to store the first model and receive the trained first model from the first entity.

In some embodiments, the first model is an AI model, and the second entity 102 is configured to store the AI model and receive the trained AI model from the first entity, for example, the second entity is an AI model storage entity.

In some embodiments, the second entity 102 is at least one of a core network device, a terminal, an access network device, or a third-party server.

In some embodiments, the second entity 102 may be an NRF, an OAM, an NWDAF, or other new core network devices.

For example, the first entity is an NWDAF, and the NWDAF sends the trained AI model to an NRF or other new NFs which are configured to store the AI model.

At step 2104, the second entity 102 stores the trained first model.

In some embodiments, the first entity 101 sends the trained first model to the second entity 102, and the second entity 102 receives the trained first model and is responsible for storing the first model.

In some embodiments, whenever a new AI model is trained, the first entity 101 sends the new AI model to the second entity 102 for storage.

In an embodiment of the present disclosure, the method includes: obtaining, by a third entity 103, the trained first model.

In some embodiments, the third entity 103 is an entity using the first model.

In some embodiments, the first model is an AI model, and the third entity 103 is an entity that uses the AI model, for example, the third entity 103 is an AI model inference entity.

In some embodiments, the third entity 103 may be at least one of a core network device, a terminal, an access network device, or a third-party server.

In some embodiments, the third entity 103 may be a core network device, such as an OAM or other NFs.

In some embodiments, the third entity 103 may be an access network device, such as a 5G radio access network, e.g., a next generation radio access network (NG-RAN).

In some embodiments, obtaining, by the third entity 103, the trained first model may include two schemes: step 2105a + step 2106, and step 2105b + step 2106.

At step 2105a, the third entity 103 sends a subscription message to the second entity 102.

The subscription message is used to subscribe to the trained first model.

In some embodiments, the subscription is a messaging pattern, and may specifically be known as a publish-subscribe pattern or an observer model. The subscription defines a one-to-many relationship between objects, allowing multiple observer objects to monitor a single subject object simultaneously. When an object changes, all objects that depend on it will be notified. For example, the third entity 103 subscribes to the trained first model by sending a subscription message to the second entity 102. When the trained first model changes, the second entity 102 may notify all third entities 103 that have subscribed to the trained first model.

At step 2105b, the third entity 103 sends a request message to the second entity 102.

The request message is used to request the second entity 102 to send the trained first model.

In some embodiments, steps 2105a and 2105b may be performed in an alternate order or simultaneously.

At step 2106, the second entity 102 sends the trained first model to the third entity 103.

In some embodiments, the third entity 103 may request an AI model from the second entity 102, and the second entity 102 may send the AI model to the third entity 103 in response to the request from the third entity 103.

For example, a UE or an (R)AN or other NFs may request the AI model from an NRF or other new NFs responsible for AI model storage. In response to the request from the UE or the (R)AN or other NFs, the NRF or other new NFs responsible for AI model storage send the AI model to the UE or the (R)AN or other NFs.

In some embodiments, the third entity 103 may subscribe to the AI model from the second entity 102. After receiving the new version of the AI model sent by the first entity 101, the second entity 102 may autonomously send the new version of the AI model to the third entity 103 or notify the third entity 103 to retrieve the new version of the AI model.

For example, the first entity is an NWDAF. The UE or the (R)AN or other NFs subscribe to the AI model from the NRF or other new NFs responsible for AI model storage. Whenever the NWDAF trains a new version of the AI model, the NRF or other new NFs responsible for AI model storage may trigger a procedure to update the AI model in the UE or the (R)AN or other NFs. The NRF or other new NFs responsible for AI model storage may notify the UE or the (R)AN or other NFs that subscribe to the AI model, and deliver the new version of the AI model after the AI model is updated to the UE or the (R)AN or other NFs.

In some embodiments, a first network device is also included, and is responsible for forwarding the subscription notification from the second entity 102 to the third entity 103, or for forwarding the request message sent by the second entity 102 to the third entity 103.

In some embodiments, the first network device may be an AMF network element.

For example, if the second entity is an NRF and the third entity is a UE, the UE sends a request message, and the request message is used to request the NRF to send an AI model. The AMF forwards the request message sent by the UE to the NRF. In response to the request message, the NRF sends the AI model to the UE via the AMF.

For example, if the second entity is an NRF and the third entity is a UE, the UE subscribes to the AI model from the NRF. When a new version of the AI model is available, the NRF sends a subscription notification. The AMF forwards the subscription notification from the NRF to the UE. The UE obtains the new version of the AI model based on the subscription notification. For example, the subscription notification may include a server address. The UE establishes a connection to the server based on the server address to retrieve the new version of the AI model. Alternatively, the NRF may directly send the new version of the AI model to the UE via the AMF.

At step 2107, the third entity 103 uses the trained first model.

In some embodiments, using the trained first model includes using the trained first model to perform at least one of: network data analysis, communication resource allocation, load balancing, positioning, interference management, beam management, CSI enhancement, network automation, or network energy saving.

For example, for the first model used for network energy saving, a communication network system collects user access data from the first entity 101 to train the first model. The first model may be used to predict the current number of users accessing the network. The first entity 101 sends the first model to the second entity 102, and the second entity 102 sends the first model to the third entity 103 that subscribes to/requests the first model. The third entity 103 predicts the current number of users based on the first model. If the number of users is small, the third entity 103 may shut down the corresponding network server to achieve network energy saving.

The communication method involved in the embodiments of the present disclosure may include at least one of steps S2101 to S2107. For example, steps 2101 to 2104 may be implemented as an independent embodiment, and steps S2101 to S2106 may be implemented as an independent embodiment, but the communication method is not limited thereto.

In some embodiments, steps 2101 to 2102, step S2105a, step S2105b, and step S2106 are optional steps, and one or more of these steps may be omitted or substituted in different embodiments.

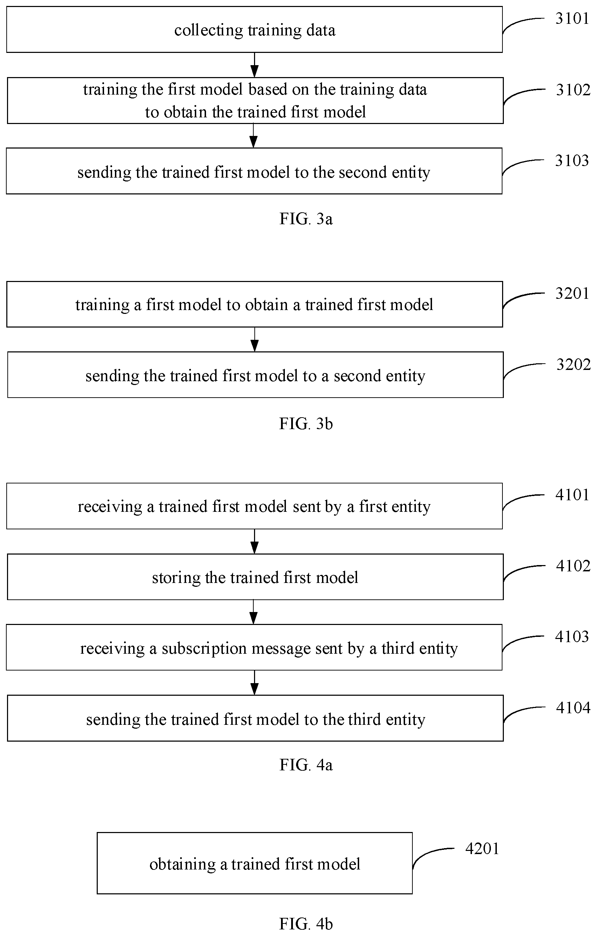

FIG. 3a is a schematic flowchart illustrating a communication method according to an embodiment of the present disclosure. As shown in FIG. 3a, the embodiments of the present disclosure relate to a communication method, which is performed by the first entity 101. The method includes the following steps.

At step 3101, training data is collected.

Regarding the optional implementation of step S3101, reference may be made to the optional implementation of step S2101 in FIG. 2 and other related parts in the embodiments involved in FIG. 2, which will not be repeated here.

At step 3102, the first model is trained based on the training data to obtain the trained first model.

Regarding the optional implementation of step S3102, reference may be made to the optional implementation of step S2102 in FIG. 2 and other related parts in the embodiments involved in FIG. 2, which will not be repeated here.

At step 3103, the trained first model is sent to the second entity.

Regarding the optional implementation of step S3103, reference may be made to the optional implementation of step S2103 in FIG. 2 and other related parts in the embodiments involved in FIG. 2, which will not be repeated here.

In some embodiments, the first entity is at least one of a core network device, a terminal, an access network device, or a third-party server, and the second entity is at least one of a core network device, a terminal, an access network device, or a third-party server.

In some embodiments, the first model is used for at least one of: network data analysis, communication resource allocation, load balancing, positioning, interference management, beam management, CSI enhancement, network automation, or network energy saving.

The communication method involved in the embodiments of the present disclosure may include at least one of steps S3101 to S3103.

In some embodiments, steps 3101 and 3102 are optional steps, and one or more of these steps may be omitted or substituted in different embodiments.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 3b is a schematic flowchart illustrating a communication method according to an embodiment of the present disclosure. As shown in FIG. 3b, the embodiments of the present disclosure relate to a communication method, which is performed by the first entity 101. The method includes the following steps.

At step 3201, a first model is trained to obtain a trained first model.

Regarding the optional implementation of step S3201, reference may be made to the optional implementations of steps S2101 and S2102 in FIG. 2 and other related parts in the embodiments involved in FIG. 2, which will not be repeated here.

In some embodiments, training the first model to obtain the trained first model includes: collecting training data, and training the first model based on the training data to obtain the trained first model.

At step 3202, the trained first model is sent to a second entity.

Regarding the optional implementation of step S3103, reference may be made to the optional implementation of step S2103 in FIG. 2 and other related parts in the embodiments involved in FIG. 2, which will not be repeated here.

In some embodiments, the first entity is at least one of a core network device, a terminal, an access network device, or a third-party server, and the second entity is at least one of a core network device, a terminal, an access network device, or a third-party server.

In some embodiments, the first model is used for at least one of: network data analysis, communication resource allocation, load balancing, positioning, interference management, beam management, CSI enhancement, network automation, or network energy saving.

The communication method involved in the embodiments of the present disclosure may include at least one of steps S3101 to S3102.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 4a is a schematic flowchart illustrating a communication method according to an embodiment of the present disclosure. As shown in FIG. 4a, the embodiments of the present disclosure relate to a communication method, which is performed by the second entity 102. The method includes the following steps.

At step 4101, a trained first model sent by a first entity is received.

Regarding the optional implementation of step 4101, reference may be made to the optional implementation of step 2103 in FIG. 2 and other related parts in the embodiments involved in FIG. 2, which will not be repeated here.

In some embodiments, the first entity is at least one of a core network device, a terminal, an access network device, or a third-party server, and the second entity is at least one of a core network device, a terminal, an access network device, or a third-party server.

In some embodiments, the first model is used for at least one of: network data analysis, communication resource allocation, load balancing, positioning, interference management, beam management, CSI enhancement, network automation, or network energy saving.

At step 4102, the trained first model is stored.

Regarding the optional implementation of step 4102, reference may be made to the optional implementation of step 2104 in FIG. 2 and other related parts in the embodiments involved in FIG. 2, which will not be repeated here.

At step 4103, a subscription message sent by a third entity is received.

The third entity is configured to use the trained first model, and the subscription message is used to subscribe to the trained first model.

Regarding the optional implementation of step 4103, reference may be made to the optional implementation of step 2105a in FIG. 2 and other related parts in the embodiments involved in FIG. 2, which will not be repeated here.

At step 4104, the trained first model is sent to the third entity.

Regarding the optional implementation of step 4104, reference may be made to the optional implementation of step 2106 in FIG. 2 and other related parts in the embodiments involved in FIG. 2, which will not be repeated here.

The communication method involved in the embodiments of the present disclosure may include at least one of steps S4101 to S4104. Steps 4101 + 4102 + 4104 may be implemented as an independent embodiment, but the communication method is not limited thereto.

In some embodiments, steps 4102, 4103, and 4104 are optional steps, and one or more of these steps may be omitted or substituted in different embodiments.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 4b is a schematic flowchart illustrating a communication method according to an embodiment of the present disclosure. As shown in FIG. 4b, the embodiments of the present disclosure relate to a communication method, which is performed by the second entity 102. The method includes the following step.

At step 4201, a trained first model is obtained.

Regarding the optional implementation of step S4201, reference may be made to the optional implementation of step S2103 in FIG. 2 and other related parts in the embodiments involved in FIG. 2, which will not be repeated here.

In some embodiments, obtaining the trained first model includes: receiving the trained first model sent by the first entity.

In some embodiments, the method further includes: storing the trained first model.

In some embodiments, the method further includes: receiving a subscription message sent by a third entity, where the third entity is configured to use the trained first model, and the subscription message is used to subscribe to the trained first model.

In some embodiments, the method further includes: sending the trained first model to the third entity.

In some embodiments, the first entity is at least one of a core network device, a terminal, an access network device, or a third-party server, and the second entity is at least one of a core network device, a terminal, an access network device, or a third-party server.

In some embodiments, the first model is used for at least one of: network data analysis, communication resource allocation, load balancing, positioning, interference management, beam management, CSI enhancement, network automation, or network energy saving.

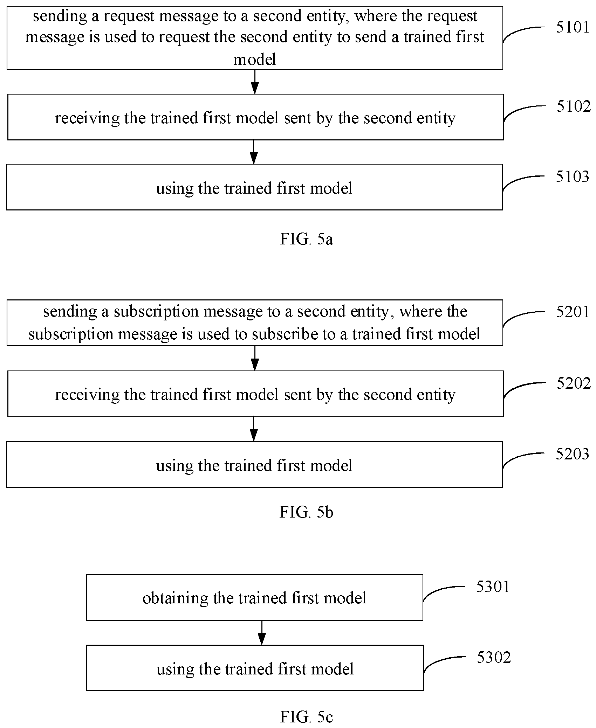

FIG. 5a is a schematic flowchart illustrating a communication method according to an embodiment of the present disclosure. As shown in FIG. 5a, the embodiments of the present disclosure relate to a communication method, which is performed by the third entity 103. The method includes the following steps.

At step 5101, a request message is sent to a second entity.

The request message is used to request the second entity to send a trained first model.

Regarding the optional implementation of step 5101, reference may be made to the optional implementation of step 2105b in FIG. 2 and other related parts in the embodiments involved in FIG. 2, which will not be repeated here.

At step 5102, the trained first model sent by the second entity is received.

Regarding the optional implementation of step 5102, reference may be made to the optional implementation of step 2106 in FIG. 2 and other related parts in the embodiments involved in FIG. 2, which will not be repeated here.

At step 5103, the trained first model is used.

Regarding the optional implementation of step 5103, reference may be made to the optional implementation of step 2107 in FIG. 2 and other related parts in the embodiments involved in FIG. 2, which will not be repeated here.

In some embodiments, using the trained first model includes: using the trained first model to perform at least one of: network data analysis, communication resource allocation, load balancing, positioning, interference management, beam management, CSI enhancement, network automation, or network energy saving.

The communication method involved in the embodiments of the present disclosure may include at least one of steps S5101 to S5103. Steps 5102 + 5103 may be implemented as an independent embodiment, but the communication method is not limited thereto.

In some embodiments, steps 5101 and 5102 are optional steps, and one or more of these steps may be omitted or substituted in different embodiments.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 5b is a schematic flowchart illustrating a communication method according to an embodiment of the present disclosure. As shown in FIG. 5b, the embodiments of the present disclosure relate to a communication method, which is performed by the third entity 103. The method includes the following steps.

At step 5201, a subscription message is sent to a second entity.

The subscription message is used to subscribe to a trained first model.

Regarding the optional implementation of step 5201, reference may be made to the optional implementation of step 2105a in FIG. 2 and other related parts in the embodiments involved in FIG. 2, which will not be repeated here.

At step 5202, the trained first model sent by the second entity is received.

Regarding the optional implementation of step 5202, reference may be made to the optional implementation of step 2106 in FIG. 2 and other related parts in the embodiments involved in FIG. 2, which will not be repeated here.

At step 5203, the trained first model is used.

Regarding the optional implementation of step 5203, reference may be made to the optional implementation of step 2107 in FIG. 2 and other related parts in the embodiments involved in FIG. 2, which will not be repeated here.

In some embodiments, using the trained first model includes: using the trained first model to perform at least one of: network data analysis, communication resource allocation, load balancing, positioning, interference management, beam management, CSI enhancement, network automation, or network energy saving.

The communication method involved in the embodiments of the present disclosure may include at least one of steps S5201 to S5203. Steps 5202 + 5203 may be implemented as an independent embodiment, but the communication method is not limited thereto.

In some embodiments, steps 5201 and 5202 are optional steps, and one or more of these steps may be omitted or substituted in different embodiments.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

FIG. 5c is a schematic flowchart illustrating a communication method according to an embodiment of the present disclosure. As shown in FIG. 5c, the embodiments of the present disclosure relate to a communication method, which is performed by the third entity 103. The method includes the following steps.

At step 5301, a trained first model is obtained.

The subscription message is used to subscribe to the trained first model.

Regarding the optional implementations of step 5301, reference may be made to the optional implementations of steps 2105a, 2105b, and 2106 in FIG. 2 and other related parts in the embodiments involved in FIG. 2, which will not be repeated here.

In some embodiments, obtaining the trained first model includes: receiving the trained first model sent by the second entity.

In some embodiments, the method further includes at least one of: sending a request message to the second entity, the request message being used to request the second entity to send the trained first model; and sending a subscription message to the second entity, the subscription message being used to subscribe to the trained first model.

At step 5302, the trained first model is used.

Regarding the optional implementation of step 5302, reference may be made to the optional implementation of step 2107 in FIG. 2 and other related parts in the embodiments involved in FIG. 2, which will not be repeated here.

In some embodiments, using the trained first model includes: using the trained first model to perform at least one of: network data analysis, communication resource allocation, load balancing, positioning, interference management, beam management, CSI enhancement, network automation, or network energy saving.

In this implementation or embodiment, unless there is any contradiction, individual steps may be independent, arbitrarily combined or exchanged in order, and the optional implementations or embodiments may be arbitrarily combined and may be arbitrarily combined with other implementations or embodiments.

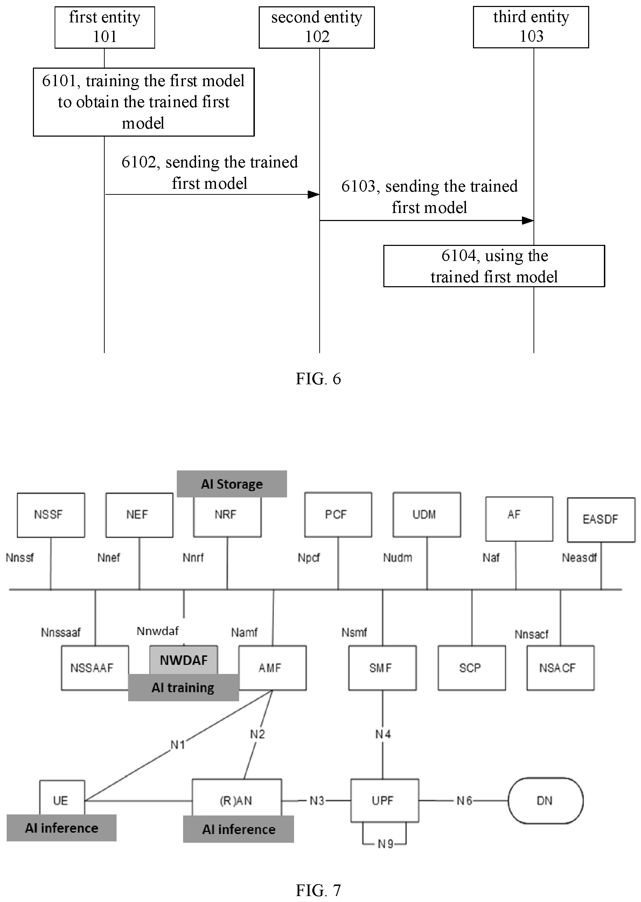

FIG. 6 is a schematic flowchart illustrating a communication method according to an embodiment of the present disclosure. As shown in FIG. 6, the embodiments of the present disclosure relate to a communication method, which is performed by the communication system 100. The method includes the following steps.

At step 6101, a first entity trains a first model to obtain a trained first model.

Regarding the optional implementation of step 6101, reference may be made to the optional implementations of steps 2101 and 2102 in FIG. 2, as well as other related parts in the embodiments involved in FIG. 2. In some optional embodiments, step 6101 may include steps 3101 and 3102 in FIG. 3a and the optional implementations of FIGS. 3a to 3b, as well as other related parts in the embodiments involved in FIG. 2, which will not be repeated here.

At step 6102, the first entity sends the trained first model to a second entity.

Regarding the optional implementation of step 6102, reference may be made to the optional implementation of step 2103 in FIG. 2 and other related parts in the embodiments involved in FIG. 2. In some optional embodiments, step 6102 may include step 3103 in FIG. 3a, step 4101 in FIG. 4a, optional implementations of FIGS. 3a to 3b and FIGS. 4a to 4b, as well as other related parts in the embodiments involved in FIG. 2, which will not be repeated here.

At step 6103, the second entity sends the trained first model to a third entity.

Regarding the optional implementation of step 6103, reference may be made to the optional implementation of step 2106 in FIG. 2 and other related parts in the embodiments involved in FIG. 2. In some optional embodiments, step 6103 may include step 4104 in FIG. 4a, step 5102 in FIG. 5a, step 5202 in FIG. 5b, optional implementations of FIGS. 4a to 4b and FIGS. 5a to 5b, and other related parts in the embodiments involved in FIG. 2, which will not be repeated here.

At step 6104, the third entity uses the trained first model.

Regarding the optional implementation of step 6101, reference may be made to the optional implementation of step 2107 in FIG. 2 and other related parts in the embodiments involved in FIG. 2. In some optional embodiments, step 6104 may include the optional implementations of FIGS. 5a to 5c and other related parts in the embodiments involved in FIG. 2, which will not be repeated here.

In some embodiments, the above-mentioned method may include the methods described in the embodiments of the above-mentioned communication system side, the above-mentioned first entity side, the above-mentioned second entity side, and the above-mentioned second entity side, which will not be repeated here.

The present disclosure provides a 5G system supporting AI, including the following entities.

An AI model training entity and an AI model storage entity are logical entities responsible for training an AI model by collecting data from other necessary NFs, a UE, or an OAM. In a 5G system (5GS), the AI model storage entity may be an NWDAF or other new NFs.

An AI model storage entity is a logical entity responsible for storing the AI model. In the 5GS, the AI model storage entity may be an NRF or other new NFs.

An AI model inference entity is an entity that uses the AI model. The AI model inference entity may be a UE, or an (R)AN such as a base station (gNB).

As shown in FIG. 7, the above-mentioned system is illustrated by taking an NWDAF as the AI model training entity, an NRF as the AI model storage entity, and a UE and an (R)AN as the AI model inference entities.

In some embodiments, the NWDAF trains the AI model by collecting necessary data from other NFs (e.g., gNBs, UPFs, PCFs, or the like), or an OAM, or a UE. After the training of the AI model is completed, the NWDAF may send the trained AI model to the NRF or other new NFs which are configured to store the AI model.

In some embodiments, the NRF receives the trained AI model from the NWDAF. The NRF may trigger a procedure to update the AI model in the UE or the (R)AN or other NFs.

In some embodiments, the UE or the RAN may request the AI model from the NRF (or other new NFs responsible for AI model storage), or the NRF may deliver the AI model after the AI model has been updated to the UE, the RAN, or other NFs.

In some embodiments, the UE or the RAN may perform services based on the AI model.

The embodiments of the present disclosure further provide a device for implementing any one of the above methods. For example, a device is provided, which includes units or modules for implementing steps performed by the UE in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

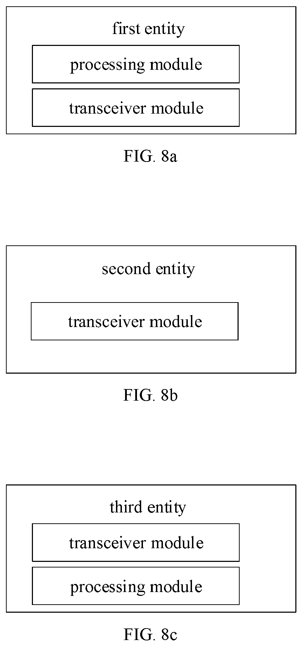

FIG. 8a is a schematic block diagram of a first entity provided in an embodiment of the present disclosure. As shown in FIG. 8a, the first entity includes a processing module configured to train a first model to obtain a trained first model, and a transceiver module configured to send the trained first model to a second entity. Optionally, the above-mentioned transceiver module is configured to execute the steps related to "sending the trained first model to the second entity" performed by the first entity 101 in any of the above methods, which will not be repeated here. Optionally, the above-mentioned processing module is configured to execute the steps related to "training the first model to obtain the trained first model" performed by the first entity 101 in any of the above methods, which will not be repeated here.

FIG. 8b is a schematic block diagram of a second entity provided in an embodiment of the present disclosure. As shown in FIG. 8b, the second entity includes a transceiver module configured to obtain a trained first model. Optionally, the above-mentioned transceiver module is configured to perform the steps related to "obtaining the trained first model" performed by the second entity 102 in any of the above methods, which will not be repeated here.

FIG. 8c is a schematic block diagram of a third entity provided in an embodiment of the present disclosure. As shown in FIG. 8c, the third entity includes a transceiver module configured to obtain a trained first model, and a processing module configured to use the trained first model. Optionally, the above-mentioned transceiver module is configured to execute the steps related to "obtaining the trained first model" performed by the third entity 103 in any of the above methods, which will not be repeated here. Optionally, the above-mentioned processing module is configured to execute the steps related to "obtaining the trained first model" performed by the third entity 103 in any of the above methods, which will not be repeated here.

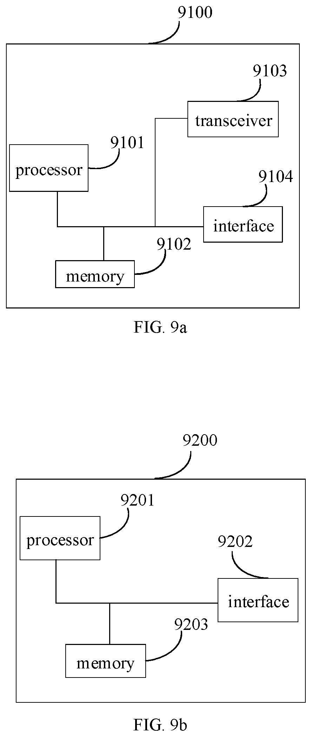

FIG. 9a is a schematic block diagram of a communication device 9100 provided in an embodiment of the present disclosure. The communication device 9100 may be a first network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 9100 may be configured to implement the methods as described in the above-mentioned method embodiments. For details, reference may be made to the description in the above-mentioned method embodiments.

As shown in FIG. 9a, the communication device 9100 includes one or more processors 9101. The processor 9101 may be a general-purpose processor, a special-purpose processor, or the like. The processor 9101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The processor 9101 is configured to invoke instructions to enable the communication device 9100 to execute any one of the above methods.

In some embodiments, the communication device 9100 further includes one or more memories 9102 for storing instructions. Alternatively, all or some of the memories 9102 may be located outside the communication device 9100.

In some embodiments, the communication device 9100 further includes one or more transceivers 9103. When the communication device 9100 includes one or more transceivers 9103, the communication steps such as sending and receiving steps in the above methods are performed by the transceiver 9103, and the other steps are performed by the processor 9101.

In some embodiments, the transceiver may include a receiver and a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

Optionally, the communication device 9100 further includes one or more interface circuits 9104, which are connected to the memory 9102. The interface circuits 9104 may be configured to receive signals from the memory 9102 or other devices, and may be configured to send signals to the memory 9102 or other devices. For example, the interface circuits 9104 may read instructions stored in the memory 9102 and send the instructions to the processor 9101.

The communication device 9100 described in the above embodiments may be a network device or a terminal, but the scope of the communication device 9100 described in the present disclosure is not limited thereto, and the structure of the communication device 9100 may not be limited to FIG. 9a. The communication device 9100 may be a standalone device or part of a larger device. For example, the communication device 9100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 9b is a schematic block diagram of a chip 9200 provided in an embodiment of the present disclosure. For the case where the communication device 9100 may be a chip or a chip system, reference may be made to the block diagram of the chip 9200 shown in FIG. 9b, but the present disclosure is not limited thereto.

The chip 9200 includes one or more processors 9201, and the processor 9201 is configured to invoke instructions, so that the chip 9200 executes any one of the above methods.

In some embodiments, the chip 9200 further includes one or more interface circuits 9202, which are connected to the memory 9203. The interface circuits 9202 may be configured to receive signals from the memory 9203 or other devices, and may be configured to send signals to the memory 9203 or other devices. For example, the interface circuits 9202 may read instructions stored in memory 9203 and send the instructions to the processor 9201. Optionally, terms such as interface circuit, interface, transceiver pin, and transceiver may be used interchangeably.

In some embodiments, the chip 9200 further includes one or more memories 9203 for storing instructions. Alternatively, all or some of the memories 9203 may be located outside the chip 9200.

The present disclosure further provides a storage medium, which has stored therein instructions that, when executed on the communication device 9100, cause the communication device 9100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 9100, causes the communication device 9100 to perform any one of the above methods. Optionally, the above-mentioned program product is a computer program product.

The present disclosure further provides a computer program that, when executed on a computer, causes the computer to perform functions of any one of the above-mentioned method embodiments.

All or some of the above embodiments may be implemented by software, hardware, firmware or any combination thereof. When implemented using the software, all or some of the above embodiments may be implemented in the form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

The corresponding relationships shown in the tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the above-mentioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A communication method, performed by a first entity, the method comprising:
training a first model to obtain a trained first model; and
sending the trained first model to a second entity.

2. The method according to claim 1, wherein training the first model to obtain the trained first model comprises:
collecting training data;
training the first model based on the training data to obtain the trained first model.

3. The method according to claim 1 or 2, wherein the first entity is at least one of a core network device, a terminal, an access network device, or a third-party server, and the second entity is at least one of a core network device, a terminal, an access network device, or a third-party server.

4. The method according to any one of claims 1 to 3, wherein the first model is used for at least one of:
network data analysis;
communication resource allocation;
load balancing;
positioning;
interference management;
beam management;
channel status information (CSI) enhancement;
network automation; or
network energy saving.

5. A communication method, performed by a second entity, the method comprising:
obtaining a trained first model.

6. The method according to claim 5, wherein obtaining the trained first model comprises:
receiving the trained first model sent by a first entity.

7. The method according to claim 5 or 6, further comprising:
storing the trained first model.

8. The method according to any one of claims 5 to 7, comprising:
receiving a subscription message sent by a third entity,
wherein the third entity is configured to use the trained first model, and the subscription message is used to subscribe to the trained first model.

9. The method according to any one of claims 5 to 8, comprising:
sending the trained first model to a third entity.

10. The method according to any one of claims 5 to 9, wherein the first entity is at least one of a core network device, a terminal, an access network device, or a third-party server, and the second entity is at least one of a core network device, a terminal, an access network device, or a third-party server.

11. The method according to any one of claims 5 to 10, wherein the first model is used for at least one of:
network data analysis;
communication resource allocation;
load balancing;
positioning;
interference management;
beam management;
channel status information (CSI) enhancement;
network automation; or
network energy saving.

12. A communication method, performed by a third entity, the method comprising:
obtaining a trained first model; and
using the trained first model.

13. The method according to claim 12, wherein obtaining the trained first model comprises:
receiving the trained first model sent by a second entity.

14. The method according to claim 13, further comprising at least one of:
sending a request message to the second entity, the request message being used to request the second entity to send the trained first model; or
sending a subscription message to the second entity, the subscription message being used to subscribe to the trained first model.

15. The method according to claim 12, wherein using the trained first model comprises:
using the trained first model to perform at least one of:
network data analysis;
communication resource allocation;
load balancing;
positioning;
interference management;
beam management;
channel status information (CSI) enhancement;
network automation; or
network energy saving.

16. A communication method, performed by a communication system, the communication system comprising a first entity, a second entity, and a third entity, the method comprising:
training, by the first entity, a first model to obtain a trained first model;
sending, by the first entity, the trained first model to the second entity;
sending, by the second entity, the trained first model to the third entity; and
using, by the third entity, the trained first model.

17. A first entity, comprising:
a processing module configured to train a first model to obtain a trained first model; and
a transceiver module configured to send the trained first model to a second entity.

18. A second entity, comprising:
a transceiver module configured to obtain a trained first model.

19. A third entity, comprising:
a transceiver module configured to obtain a trained first model; and
a processing module configured to use the trained first model.

20. A communication device, comprising:
a transceiver;
a memory; and
a processor connected to the transceiver and the memory, respectively, and configured to control a transmission and a reception of a wireless signal from the transceiver and be capable of implementing the method according to any one of claims 1 to 16 by executing computer-executable instructions in the memory.

21. A communication system, comprising:
a first entity configured to implement the method according to any one of claims 1 to 4;
a second entity configured to implement the method according to any one of claims 5 to 11;
and
a third entity configured to implement the method according to any one of claims 12 to 15.

22. The method according to claim 21, wherein the first entity is configured to train the first model, the second entity is configured to store the trained first model, and the third entity is configured to use the trained first model.

23. A computer storage medium having stored therein computer-executable instructions that, after executed by a processor, are capable of implementing the method according to any one of claims 1 to 16.
